(19) Europäisches Patentamt
European Patent Office
Office européen des brevets

(11) EP 2 689 910 A1

(12) EUROPEAN PATENT APPLICATION
published in accordance with Art. 153(4) EPC

(43) Date of publication:
**29.01.2014 Bulletin 2014/05**

(21) Application number: **12763162.0**

(22) Date of filing: **21.02.2012**

(51) Int Cl.:
***B29C 45/14*** *(2006.01)* ***B32B 27/20*** *(2006.01)*
***B32B 27/34*** *(2006.01)*

(86) International application number:
**PCT/JP2012/054091**

(87) International publication number:
**WO 2012/132639 (04.10.2012 Gazette 2012/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2011 JP 2011068450**

(71) Applicant: **Ube Industries, Ltd.**
**Ube-shi**
**Yamaguchi 755-8633 (JP)**

(72) Inventors:
- **HIRAYAMA, Shinichi**
**Ube-shi, Yamaguchi 755-8633 (JP)**
- **HARADA, Hideki**
**Ube-shi, Yamaguchi 755-8633 (JP)**

(74) Representative: **Beacham, Annabel Rose**
**Dehns**
**St Bride's House**
**10 Salisbury Square**
**London**
**EC4Y 8JD (GB)**

# (54) COMPOSITE OF METAL AND THERMOPLASTIC RESIN

(57) The objective of the present invention is to provide a composite which is obtained by firmly bonding a thermoplastic resin and a metal without deteriorating the characteristics of the thermoplastic resin. In order to achieve the objective, the present invention provides a composite obtained by contact bonding a thermoplastic resin composition (A) and a metal (B), wherein the thermoplastic resin composition (A) contains a thermoplastic resin and an inorganic filler that increases the crystallization temperature of the thermoplastic resin by 3°C or more and the metal (B) is a surface-treated metal. It is preferable that the thermoplastic resin is a polyamide resin. It is also preferable that the inorganic filler is composed of at least one substance that is selected from the group consisting of talc, graphite, magnesium oxide, kaolin and calcium carbonate.

Fig. 1

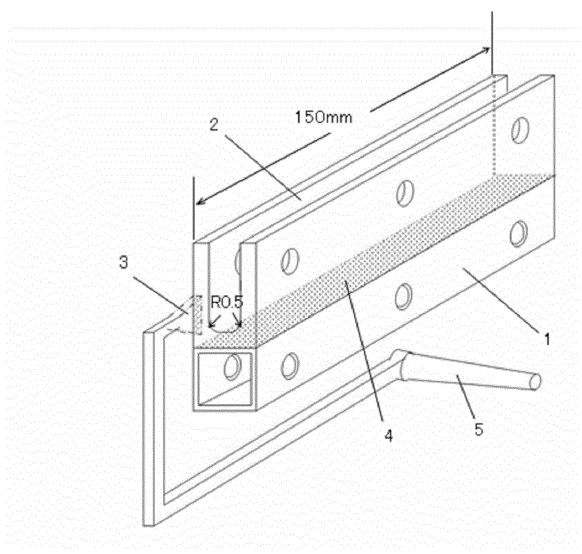


EP 2 689 910 A1

## Description

### TECHNICAL FIELD

The present invention relates to a composite of metal and thermoplastic resin.

### BACKGROUND ART

In a wide range of fields, such as automotive, electrical/electronic, and the like, engineering plastics, in which constituent materials of components that had previously been made of metal materials are replaced by resin materials, have contributed to lighter weight and lower cost of the components. However, with components in which resin materials are used alone as the constituent material, replacement with resin materials is reaching a limit, for reasons having to do with insufficient strength and rigidity at high temperatures, inadequate resistance to specific chemical substances, and the like. Moreover, it has been attempted to improve surface texture, corrosion preventive function, and the like in components made of metal materials alone, through compositing or through multi-layering with resin materials, but due to poor bonding of metal and resin, there are cases of deficient strength of the component as a whole, or, in cases of components that come into contact with liquids, of diminished functionality of the component due to infiltration or accumulation of liquid in the joined portions of the metal and the resin.

Given these circumstances, there exists a need for a technique for secure bonding of metals and resins, and a number of methods have been proposed. As one typical example, a metal surface is subjected primarily to chemical treatment to form microscopic asperities, into which a resin is flowed and solidified, to bond the metal and the resin together. Patent Document 1 discloses a procedure for forming microscopic asperities on a metal surface by a method of immersing the metal in an aqueous solution of one or more compounds selected from ammonia, hydrazine, and water-soluble amines. Patent Document 2 discloses a procedure for forming microscopic asperities on a metal surface by an anodic oxidation method. Meanwhile, Patent Document 3 discloses a method for anchoring a specific compound to a metal surface, the method involving bringing a melted resin into contact with the metal to which the specific compound has been linked, to bring about bonding of the two.

Further, techniques employing specific resins on metals having undergone specific treatments, in order to improve adhesion between the resin and the metal, have been proposed. For example, Patent Document 4 discloses a technique for preparation of an aluminum alloy having microscopic openings by an anodic oxidation method, to which polyphenylene sulfide into which an olefin resin has been blended is bonded, to improve the bonding strength. Patent Document 5 discloses a technique for bonding a polyamide resin to an aluminum alloy having undergone surface treatment with an erosive aqueous solution, and discloses that, in this case, the bonding state can be further improved by blending an aromatic polyamide or impact resistance improver to the polyamide resin.

[Prior Art Documents]

[Patent Documents]

[Patent Document 1] Japanese Patent No. 3967104
[Patent Document 2] Japanese Patent No. 4541153
[Patent Document 3] Japanese Laid-Open Patent Application No. 5-51671
[Patent Document 4] Japanese Patent No. 4527196
[Patent Document 5] Japanese Laid-Open Patent Application No. 2007-182071

### DISCLOSURE OF THE INVENTION

[Problems to Be Solved by the Invention]

However, none of these techniques for bonding resin and metal is highly practical: in the case, for example, of that disclosed in Patent Document 1, in which microscopic asperities are formed on a metal surface, and a molten resin is flowed and solidified therein, when typical thermoplastic resins such as polyamide 6 or polyamide 66 are employed, a state of secure bonding could not be obtained, as shown in the comparative examples given below. Moreover, while Patent Documents 4 and 5 disclose techniques for improvement through modification of the composition of the materials as mentioned above, with these techniques, there is the possibility that the inherent advantages of the respective thermoplastic resins, namely, strength and rigidity at high temperature, chemical resistance, and the like, will be lost.

Moreover, depending on the thermoplastic resin component, there is a possibility of higher costs and diminished secondary workability, such as moldability, weld-ability, and so on.

It is an object of the present invention to offer a composite in which a thermoplastic resin and a metal are securely bonded, without any loss of characteristics of the thermoplastic resin.

[Means to Solve the Problems]

The aforementioned object is solved by the present invention shown below.

Specifically, the present invention provides a composite obtained by contact bonding of thermoplastic resin composition (A) and a metal (B), wherein in the composite,
the thermoplastic resin composition is a composition containing a thermoplastic resin and an inorganic filler for raising the crystallization temperature of the thermoplastic resin by 3°C or more, and the metal (B) is a surface-treated metal.

In the present invention, the thermoplastic resin is preferably a polyamide resin.

The inorganic filler is preferably at least one selected from the group consisting of talc, graphite, magnesium oxide, kaolin, and calcium carbonate.

The inorganic filler is preferably at least one selected from the group consisting of talc, graphite, and magnesium oxide.

The blending amount of the inorganic filler in the thermoplastic resin composition (A) is preferably from 0.01 mass% to 50 mass%.

The surface treatment of the metal (B) is preferably a treatment for forming microscopic asperities on, or anchoring a chemical substance to, the surface thereof.

The composite of the present invention is preferably one obtained by contact bonding through injection molding of the thermoplastic resin composition (A) and the metal (B).

Further, one shrinkage-inhibiting structure selected from the group consisting of a rib, protrusion, hole, and step is provided to a surface of the thermoplastic resin composition (A) facing the bonding surface of the thermoplastic resin composition (A) and the metal (B).

Further, the composite of the present invention may have an overall shape of tube or rod shape, with the resin and metal having a multilayer structure.

[Advantageous Effects of the Invention]

The composite of the present invention affords sufficient bonding of resin and metal, with no loss of the high-temperature characteristics, chemical resistance, and so on of the thermoplastic resin, and therefore has a high structural-reinforcing effect on the metal, making it suitable for use in structural components in a wide range of fields, such as the automotive field, electrical/electronic field, general industrial machinery field, and the like. Moreover, when a metal is introduced into a resin for purposes of localized improvement of dimensional accuracy, heat resistance, and the like, according to the present invention, the anchoring state of the metal and resin may be markedly improved, further improving the quality as a composite. Similarly, in sheets, tapes, pipes, tubes, and the like, of resin and metal in a multilayer arrangement in order to increase conductivity or gas permeation-inhibiting functionality, the quality thereof can be further improved by employing the composite of the present invention.

Moreover, the composite of the present invention is effective both in techniques involving flowing and solidifying resin into microscopic asperities on a metal surface, and in techniques involving anchoring a compound to a metal surface, and bonding a resin thereto. Consequently, through the present invention, it is possible to accomplish bonding through injection molding of a thermoplastic resin onto a metal having a compound anchored to the metal surface, which had not been possible previously, whereby a composite obtained by contact bonding of a thermoplastic resin and a metal having a compound anchored to the metal surface can be manufactured.

## BRIEF DESCRIPTION OF THE DRAWINGS

FIG. 1 is a perspective view showing an embodiment of the composite of the present invention.
FIG. 2 is a perspective view showing another embodiment of the composite of the present invention.

## BEST MODE FOR CARRYING OUT THE INVENTION

The present invention provides a composite obtained by contact bonding of a thermoplastic resin (A) and a metal (B). The thermoplastic resin (A), the metal (B), and modes of contact bonding thereof are described below.

(Thermoplastic resin composition (A))

The thermoplastic resin (A) employed in the present invention is a composition containing a thermoplastic resin and an inorganic filler for raising the crystallization temperature of the thermoplastic resin by 3°C or more.

(1) Thermoplastic resin

While there are no particular limitations as to the thermoplastic resin used in the thermoplastic resin composition (A), high density polyethylene (HDPE), medium density polyethylene (MDPE), low density polyethylene (LDPE), linear low density polyethylene (LLDPE), ultra high molecular weight polyethylene (UHMWPE), polypropylene (PP), ethylene/propylene copolymer (EPR), ethylene/butene copolymer (EBR), ethylene/vinyl acetate copolymer (EVA), ethylene/acrylic acid copolymer (EAA), ethylene/methacrylic acid copolymer (EMAA), ethylene/methyl acrylate copolymer (EMA), ethylene/methyl methacrylate copolymer (EMMA), ethylene/ethyl acrylate copolymer (EEA), and other such polyolefin resins; the aforementioned polyolefin resins modified by compounds containing functional groups such as acrylic acid, methacrylic acid, maleic acid, fumaric acid, itaconic acid, crotonic acid, mesaconic acid, citraconic acid, glutaconic acid, cis-4-cyclohexene-1,2-dicarboxylic acid, endobicyclo-[2.2.1]-5-heptene-2,3-dicarboxylic acid, and other such carboxyl groups and metal salts (Na, Zn, K, Ca, Mg) thereof, maleic anhydride, itaconic anhydride, citraconic anhydride, endobicyclo-[2.2.1]-5-heptene-2,3-dicarboxylic anhydride, and other acid anhydride groups, or glycidyl acrylate, glycidyl methacrylate, glycidyl ethacrylate, glycidyl itaconate, glycidyl citraconate, and other such epoxy groups; polybutylene terephthalate (PBT), polyethylene terephthalate (PET), polytrimethylene terephthalate (PTT), polyethylene isophthalate (PEI), PET/PEI copolymer, polyarylate (PAR), polybutylene naphthalate (PBN), polyethylene naphthalate (PEN), liquid crystal polyester (LCP), polylactic acid (PLA), polyglycolic acid (PGA), and other such polyester resins; polyacetal (POM), polyphenylene oxide (PPO), and other polyether resins; polysulfone (PSF), polyether sulfone (PES), and other such polysulfone resins; polyphenylene sulfide resin (PPS), polythioether sulfone resin (PTES), and other such polythioether resins; polyether ether ketone (PEEK), polyallyl ether ketone (PAEK), and other such polyketone resins; polyacrylonitrile (PAN), polymethacrylonitrile, acrylonitrile/styrene copolymer (AS), methacrylonitrile/styrene copolymer, acrylonitrile/butadiene/styrene copolymer (ABS), methacrylonitrile/styrene/butadiene copolymer (MBS), and other such polynitrile resins; polymethyl methacrylate (PMMA), polyethyl methacrylate (PEMA), and other such polymethacrylate resins; polyvinyl acetate (PVAc) and other such polyvinyl ester resins; polyvinylidene chloride (PVDC), polyvinyl chloride (PVC), vinyl chloride/vinylidene chloride copolymer, vinylidene chloride/methyl acrylate copolymer, and other such polyvinyl resins; cellulose acetate, cellulose butyrate, and other such cellulose resins; polycarbonate (PC) and other such polycarbonate resins; thermoplastic polyimide (PI), polyamide imide (PAI), polyether imide, and other such polyimide resins; polyvinylidene fluoride (PVDF), polyvinyl fluoride (PVF), ethylene/tetrafluoroethylene copolymer (ETFE), polychlorotrifluoroethylene (PCTFE), ethylene/chlorotrifluoroethylene copolymer (ECTFE), tetrafluoroethylene/hexafluoropropylene copolymer (TFE/HFP, FEP), tetrafluoroethylene/hexafluoropropylene/vinylidene fluoride copolymer (TFE/HFP/VDF, THV), tetrafluoroethylene/perfluoro(alkyl vinyl ether) copolymer (PFA), and other such fluororesins; thermoplastic polyurethane resins, polyurethane elastomers, and polyamide elastomers or polyester elastomers apart from those specified in the present invention, and the like, may be cited. Of these, apart from polybutylene terephthalate (PBT) and polyphenylene sulfide resin (PPS), which have weak bonding strength to surface-treated metal, thermoplastic resins that exhibit relative distinct crystallization or solidification temperatures are preferred from the standpoint of improving the bonding effect to metal. Polyamide resins are more preferred, due to ease of handling during molding and the like, high heat resistance, and mechanical strength. These may be used singly, or two or more types used together.

As polyamide resins, there may be cited, for example, polycaprolactam (polyamide 6), polyundecalactam (polyamide 11), polydodecalactam (polyamide 12), polyethylene adipamide (polyamide 26), polytetramethylene adipamide (polyamide 46), polyhexamethylene adipamide (polyamide 66), polyhexamethylene azelamide (polyamide 69), polyhexamethylene sebacamide (polyamide 610), polyhexamethylene undecamide (polyamide 611), polyhexamethylene dodecamide (polyamide 612), polyhexamethylene terephthalamide (polyamide 6T), polyhexamethylene isophthalamide (polyamide 6I) , polyhexamethylene hexahydroterephthalamide (polyamide 6T(H)), polynonamethylene adipamide (polyamide 96), polynonamethylene azelamide (polyamide 99), polynonamethylene sebacamide (polyamide 910), polynonamethylene dodecamide (polyamide 912), polynonamethylene terephthalamide (polyamide 9T), polytrimethylhexamethylene terephthalamide (polyamide TMHT), polynonamethylene hexahydroterephthalamide (polyamide 9T(H)), polynonamethylene naphthalamide (polyamide 9N), polydecamethylene adipamide (polyamide 106), polydecamethylene azelamide (polyamide 109), polydecamethylene decamide (polyamide 1010), polydecamethylene dodecamide (polyamide 1012), polydecamethylene terephthalamide (polyamide 10T), polydecamethylene hexahydroterephthalamide (polyamide 10T(H)), polydecamethylene naphthalamide (polyamide 10N), polydodecamethylene adipamide (polyamide 126), polydodecamethylene azelamide (polyamide 129), polydodecamethylene sebacamide (polyamide 1210), polydodecamethylene dodecamide (polyamide 1212), polydodecamethylene terephthalamide (polyamide 12T), polydodecamethylene hexahydroterephthalamide (polyamide 12T(H)), polydodecamethylene naphthalamide (polyamide 12N),

polymetaxylylene adipamide (polyamide MXD6), polymetaxylylene suberamide (polyamide MXD8), polymetaxylylene azelamide (polyamide MXD9), polymetaxylylene sebacamide (polyamide MXD10), polymetaxylylene dodecamide (polyamide MXD12), polymetaxylylene terephthalamide (polyamide MXDT), polymetaxylylene isophthalamide (polyamide MXDI), polymetaxylylene naphthalamide (polyamide MXDN), polybis(4-aminocyclohexyl)methane dodecamide (polyamide PACM12), polybis(4-aminocyclohexyl)methane terephthalamide (polyamide PACMT), polybis(4-aminocyclohexyl)methane isophthalamide (polyamide PACMI), polybis(3-methyl-4-aminocyclohexyl)methane dodecamide (polyamide dimethyl PACM12), polyisophorone adipamide (polyamide IPD6), polyisophorone terephthalamide (polyamide IPDT), and polyamide copolymers of these. Of these, from the standpoint of a balance between material functionality, such as mechanical characteristics and chemical resistance, on the one hand, and price on the other, polyamide 6, polyamide 12, polyamide 66, polyamide 6/66 copolymer (copolymer of polyamide 6 and polyamide 66; copolymers are denoted in the same fashion hereinbelow), polyamide 6/12 copolymer, or polyamide 6/66/12 copolymer is preferred, with polyamide 6, polyamide 66, polyamide 6/66 copolymer, or polyamide 6/12 copolymer being more preferred, and polyamide 6 and/or polyamide 66 being especially preferred, from the standpoint of moldability, mechanical qualities, and durability. These may be used singly, or two or more types used together.

There are no particular limitations as to the type of terminal groups of the polyamide resin, or the concentration or molecular weight distribution thereof. In order to adjust the molecular weight, or stabilize melting during the molding process, one, or two or more, molecular weight adjusters selected from acetic acid, stearic acid, or other monocarboxylic acids, meta-xylylene diamine, isophorone diamine, and other such diamines, monoamines, or dicarboxylic acids may be added, as appropriate.

When measured according to the viscosity measurement method of JIS K-6920 in 96 mass% sulfuric acid, at a polymer concentration of 1 mass%, at a temperature of 25°C, the relative viscosity of the polyamide resin is preferably from 1.0 to 5.0, more preferably from 1.5 to 4.5, and still preferably from 1.8 to 4.0, from the standpoint of the mechanical qualities and moldability of the polyamide resin obtained.

There is no particular limitation as to the amount of aqueous extraction of the polyamide resin, as measured in accordance with the method for measuring the low-molecular weight content specified in JIS K-6920, but it is preferably 5 mass% or less, due to the possibility of giving rise to environmental problems, such as gases and the like generated during the molding process, to reduced productivity due to deposition on manufacturing equipment, or to poor appearance due to deposition on the composite.

(2) Inorganic filler

The inorganic filler for raising by 3°C or more the crystallization temperature of the thermoplastic resin employed in the thermoplastic resin composition (A) may be any inorganic filler that raises the crystallization temperature of the thermoplastic resin by 3°C or more, but from the standpoint of the bonding strength of the composite, an inorganic filler that raises the crystallization temperature of the thermoplastic resin by 6°C or more is preferred.

As specific inorganic fillers that raise the crystallization temperature of the thermoplastic resin by 3°C or more, at least one selected from the group consisting of talc, graphite, magnesium oxide, kaolin, and calcium carbonate is preferred, and at least one selected from the group consisting of talc, graphite, and magnesium oxide being more preferred.

The compounding amount of the inorganic filler is preferably 0.01 mass% to 50 mass% of the thermoplastic resin composition (A), and from the standpoint of bonding strength is preferably 0.05 mass% to 20 mass%, more preferably 5 mass% to 20 mass%. Depending on the type of thermoplastic resin, the type of metal, and the surface treatment method thereof, a state of adequate bonding may be obtained even at 0.05 mass%, and it is therefore desirable to select the compounding amount in a manner dependent on the application of the composite.

There are no particular limitations as to the mean particle size of the inorganic filler, but in consideration of the appearance and impact strength of the molded article, 20 $\mu$m or smaller is preferable, while from the standpoint of bonding to metal, 3 to 15 $\mu$m is preferred. The mean particle size is measured by sampling the inorganic filler in accordance with, for example, Powder mass mixtures - general rules for methods of sampling (JIS M8100) specified in Japanese Industrial Standards; preparing the inorganic filler as a sample for measurement in accordance with General rules for sample preparation for particle size analysis of fine ceramic raw powders (JIS R1622-1995); and measuring in accordance with Determination of particle size distribution of fine ceramic raw powders by laser diffraction method (JIS R 1629-1997). A SALD-7000 laser diffraction type particle size distribution measurement device, made by Shimadzu Corp., or the like, can be used as the device.

The inorganic filler may be subjected to a coupling treatment in order to improve cohesion to the resin, to thereby enhance the mechanical properties and molded appearance. As coupling agents, silane coupling agents, epoxy silane coupling agents, and the like may be cited. The added amount for treatment can be from 0.01 to 5 mass parts per 100 mass parts of the inorganic filler.

In addition to the inorganic filler, the thermoplastic resin composition (A) may contain customarily compounded

additives, modifiers, and reinforcing materials of various types, in amounts such that the characteristics of the present invention are not diminished, for example, thermal stabilizers, antioxidants, UV absorbers, weathering agents, fillers, plasticizers, blowing agents, anti-blocking agents, tackifying agents, sealing improvers, antifogging agents, release agents, crosslinking agents, blowing agents, flame retardants, coloring agents (pigments, dyes, and the like), coupling agents, inorganic reinforcing materials such as glass fibers, and the like. There are no particular limitations as to the method for compounding various additives into the thermoplastic resin, and there may be cited typical methods such as dry-blending methods employing a tumbler or mixer; incorporation through melt-kneading in advance at the concentration to be used during molding, employing a single-screw or twin-screw extruder; a masterbatch method involving incorporation into the starting material in advance at high concentration, employing a single-screw or twin-screw extruder, followed by dilution for use at the time of molding, or the like.

(Metal (B))

There are no particular limitations as to the metal qualities of the metal (B) of the present invention, provided that the metal is surface-treated. For example, iron, copper, nickel, gold, silver, platinum, cobalt, zinc, lead, tin, titanium, chromium, aluminum, magnesium, manganese, and alloys thereof (stainless steel, brass, phosphor bronze, and the like) can be cited. Metals having a thin film or coating of metal (metal plating, a deposited film, a coating film, or the like) may be targeted as well.

Surface treatment refers, for example, to treatment by immersion of the metal surface in an erosive liquid or to anodic oxidation, to bring about a state in which microscopic asperities are produced on the metal surface, or a state in which a chemical substance is anchored to the metal surface.

Water soluble amine compounds can be cited as erosive liquids, and as water soluble amine compounds, there may be cited ammonia, hydrazine, methylamine, dimethylamine, trimethylamine, ethylamine, diethylamine, triethylamine, ethylenediamine, ethanolamine, allylamine, ethanolamine, diethanolamine, triethanolamine, aniline, and other amines. Of these, hydrazine is particularly preferred, due to its minimal odor and effectiveness at low concentration.

An anodic oxidation film refers to an oxidation film produced on a metal surface when electrical current passes through the metal used as an anode, in an electrolyte solution. The aforementioned water soluble amine compounds may be cited as electrolytes, for example.

The state in which microscopic asperities are produced on the metal surface is preferably one in which the metal surface, when measured by observation with an electron microscope, is covered by microscopic recesses or hole openings of number-average diameter of 10 to 100 nm.

Triazine dithiol derivatives may be cited as chemical substances for anchoring to the metal surface. The triazine dithiol derivative is preferably one represented by the following general formula.

[Formula 1]

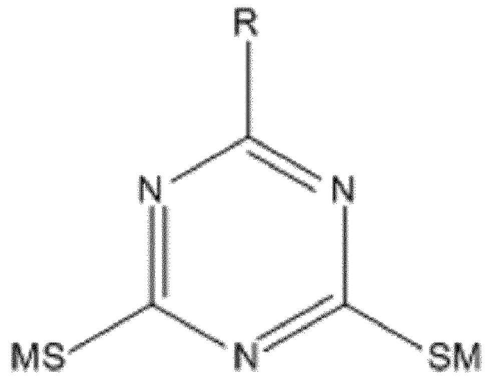

(Preferably, in the formula, R is -OR1, -OOR1, -SmR1, - NR1(R2); R1 and R2 are H, a hydroxyl group, a carbonyl group, an ether group, an ester group, an amide group, an amino group, a phenyl group, a cycloalkyl group, an alkyl group, or a substituent group including an unsaturated group such as an alkyne or alkane, m is an integer from 1 to 8, and M is H, or Na, Li, K, Ba, Ca, an ammonium salt, or other alkali).

As specific examples of triazine dithiol derivatives of the aforementioned general formula, there may be cited 1,3,5-triazine-2,4,6-trithiol, 1,3,5-triazine-2,4,6-trithiol monosodium, 1,3,5-triazine-2,4,6-trithiol triethanolamine, 6-anilino-1,3,5-triazine-2,4-dithiol, 6-anilino-1,3,5-triazine-2,4-dithiol monosodium, 6-dibutylamino-1,3,5-triazine-2,4-dithiol, 6-dibutylamino-1,3,5-triazine-2,4-dithiol monosodium, 6-diallylamino-1,3,5-triazine-2,4-dithiol, 6-diallylamino-1,3,5-triazine-2,4-dithiol monosodium, 1,3,5-triazine-2,4,6-trithiol ditetrabutylammonium salt, 6-dibutylamino-1,3,5-triazine-2,4-dithiol tetrabutylammonium salt, 6-dioctylamino-1,3,5-triazine-2,4-dithiol, 6-dioctylamino-1,3,5-triazine-2,4-dithiol monosodium, 6-dilaurylamino-1,3,5-triazine-2,4-dithiol, 6-dilaurylamino-1,3,5-triazine-2,4-dithiol monosodium, 6-stearylamino-1,3,5-triazine-2,4-dithiol, 6-stearylamino-1,3,5-triazine-2,4-dithiol monopotassium, 6-oleylamino-1,3,5-triazine-2,4-dithiol, and 6-oleylamino-1,3,5-triazine-2,4-dithiol monopotassium.

As the method for anchoring the chemical substance on a metal surface, there can be cited a method employing an aqueous solution of the chemical substance, or a solution thereof in a medium of an organic solvent, such as methyl alcohol, isopropyl alcohol, ethyl alcohol, acetone, toluene, ethyl cellosolve, dimethyl formaldehyde, tetrahydrofuran, methyl ethyl ketone, benzene, acetic acid ethyl ether, or the like, in which the metal is deployed as the anode, and a platinum plate, titanium plate, or carbon plate as the cathode, passing a 0.1 mA/dm$^2$-10 A/dm2 electric current of 20 V or below therethrough, for 0.1 second to 10 minutes at 0-80°C.

The surface-treated metal is preferably a metal in which the metal surface is covered by recesses or hole openings of number-average diameter of 10 to 100 nm as measured by electron microscope observation, or a metal to which a triazine thiol derivative is anchored.

(Composite)

In the present invention, there are no particular limitations as to the method for contact bonding of the thermoplastic resin composition (A) and the metal (B), but contact bonding by injection molding is preferred. For example, a composite in which the thermoplastic resin composition (A) and the metal (B) are bonded may be obtained by arranging the metal (B) on one die, closing the die, introducing the thermoplastic resin composition (A) into the injection molded from the hopper of the injection molder, and injecting the molded resin into the die, then opening and parting the moveable die.

The conditions for injection molding will differ depending on the type of thermoplastic resin, and there are no particular limitations, but the die temperature is preferably from 10°C to 160°C. Generally, from the standpoint of product qualities such as strength, and of the molding cycle, from 40°C to 120°C is more preferred, with 90°C or above being still more preferred, for injection molding to bond to the metal.

As discussed above, according to the present invention, the state of bonding to a metal can be improved by employing a thermoplastic resin composition (A) that contains a thermoplastic resin and an inorganic filler blended in to raise the crystallization temperature of the thermoplastic resin, but it is desirable to minimize molding shrinkage when designing the shape of components or products, as shall be apparent. For example, as shown in Fig. 2, in the case of bonding a lamellar resin member 20 of predetermined thickness to one surface of a flat plate of metal 10, by forming ribs 21 surrounding the surface on the opposite side from the resin member 20 bonding surface, movement in the mold section corresponding to the shape of the space formed by the ribs 21 within the dies is minimized, thereby rendering the resin member 20 structurally resistant to shrinkage as well. In this case, the thickness of the resin member 20 is preferably about 0.5 to 10 mm, and typically the height of the ribs 21 is preferably 1.0 mm or greater, depending on the rate of shrinkage of the resin material. Also, protrusions (bosses), holes, steps, or the like could be furnished instead of the ribs 21.

In the present invention, the method for contact bonding the thermoplastic resin composition (A) and the metal (B) can be extrusion performed by the usual methods. In this case, the overall shape is preferably that of a tube or rod having a uniform cross section, such as cylindrical or the like, and having a multilayer configuration of resin and metal.

Because the resin and the metal are sufficiently bonded in the composite of the present invention, application is possible for a wide variety of purposes, such as automotive components, electrical/electronic components, general mechanical components, sheets, tape, pipes, tubes, and the like, and the composite is particularly suitable for use in applications in which heat resistance, minimal gas/liquid permeability, dimensional/shape stability, electrical conductivity, heat conductivity, and strength are required concomitantly, such as in automotive fuel components, for example.

[Examples]

The present invention is described more specifically below through examples, but is not limited to the following examples insofar as there is no departure from the scope of the present invention. The materials used and the types of evaluation methods are shown next.

(Thermoplastic resin composition (A))

Polyamide resin composition (a-1)

A polyamide resin composition (hereinafter designated as (a-1)) comprising 40 mass% of talc (PKP-80 made

by Fuji Talc Industrial Co. Ltd.) having a 14 μm mean particle size, surface treated with 1 mass% of an aminosilane coupling agent; and 60 mass% of polyamide 6 of 2.47 relative viscosity, and an aqueous extraction fraction of 5 mass% or less.

Polyamide resin composition (a-2)

A polyamide resin composition (a-2) (hereinafter designated as (a-2)) similar to (a-1) except that the blended amount of talc in (a-1) was reduced to 0.5 mass%.

Polyamide resin composition (a-3)

A polyamide resin composition (a-3) (hereinafter designated as (a-3)) comprising 30 mass% of talc (SIMGON M made by Nippon Talc Co. Ltd.) of 8 μm mean particle size; and 70 mass% of polyamide 6 of 2.47 relative viscosity, and an aqueous extraction fraction of 5 mass% or less.

Polyamide resin composition (a-4)

A polyamide resin composition (a-4) (hereinafter designated as (a-4)) comprising 40 volume% of graphite (SP-10 made by Nippon Graphite Industries Co. Ltd.) of 33 μm mean particle size and bulk density of 0.18 g/$cm^3$; and 60 volume% of polyamide 6 of 2.47 relative viscosity, and an aqueous extraction fraction of 5 mass% or less.

Polyamide resin composition (a-5)

A polyamide resin composition (a-5) (hereinafter designated as (a-5)) comprising 40 volume% of magnesium oxide (RF-50-AC made by Ube Material Industries Co. Ltd.) of 2.3 μm mean particle size and bulk density of 0.4 g/$cm^3$ ; and 60 volume% of polyamide 6 of 2.47 relative viscosity, and an aqueous extraction fraction of 5 mass% or less.

Polyamide resin composition (a-6)

A polyamide resin composition (a-6) (hereinafter designated as (a-6)) comprising 40 mass% of wollastonite (FPW-400S made by Kinsei Matec Co. Ltd.) of 7-9 μm mean particle size; and 60 mass% of polyamide 6 of 2.47 relative viscosity, and an aqueous extraction fraction of 5 mass% or less.

Polyamide resin composition (a-7)

A polyamide resin composition (a-7) (hereinafter designated as (a-7)) comprising 30 mass% of glass fiber (ECSO3T249 made by Nippon Electric Glass Co. Ltd.); and 70 mass% of polyamide 6 of 2.64 relative viscosity, and an aqueous extraction fraction of 5 mass% or less.

Polyamide resin composition (a-8)

A polyamide resin composition (a-8) (hereinafter designated as (a-8)) comprising 45 mass% of glass fiber (ECSO3T249 made by Nippon Electric Glass Co. Ltd.); and 55 mass% of polyamide 6 of 2.64 relative viscosity, and an aqueous extraction fraction of 5 mass% or less.

Polyamide resin composition (a-9)

A polyamide resin composition (a-9) (hereinafter designated as (a-9)) comprising 45 mass% of glass fiber (ECSO3T289 made by Nippon Electric Glass Co. Ltd.); and 55 mass% of polyamide 66 of 2.75 relative viscosity, and an aqueous extraction fraction of 5 mass% or less.

Polyamide resin composition (a-10)

A polyamide resin composition (a-10) (hereinafter designated as (a-10)) comprising 35 mass% of glass fiber (ECSO3T289 made by Nippon Electric Glass Co. Ltd.); 5 mass% of polyamide 12; 13 mass% of aromatic polyamide; and 47 mass% of polyamide 66 of 2.75 relative viscosity, and an aqueous extraction fraction of 5 mass% or less.

Polyamide resin composition (a-11)

Polyamide 6 resin of 2.47 relative viscosity, an aqueous extraction fraction of 5 mass% or less, and a crystallization temperature Tc of 179.8°C (hereinafter designated as (a-11) ).

(Metal (B))

Test pieces of stainless steel, steel material, and aluminum, having exterior dimensions of 12 mm × 12 mm, thickness of 1.0 mm, and length of 150 mm were prepared.

For the stainless steel, SUS304-HL stainless steel containing 18% Cr and 8% Ni was used.

For the steel, STKMR290 compliant with specifications for rectangular steel tubing for mechanical construction use was used.

For the aluminum, A5052 specified in JIS H4040:2006 was used.

The surfaces of the respective test pieces were subjected to surface treatment employing the erosive liquid (hydrazine) disclosed in Patent Document 1 to form microscopic asperities (hereinafter denoted as Treatment 1), or to surface treatment employing the triazine dithiol derivative disclosed in Patent Document 3 for anchoring to the metal surface (hereinafter denoted as Treatment 2).

The surface-treated metal was placed in a multilayer pouch of polyethylene and aluminum, sealed with a heat sealing machine, and kept at room temperature until just before bonding molding to the resin.

(Strength measurements and evaluation of bonding)

The metal member of the composite shown by 1 in Fig. 1 was secured in an N735 vise made by ERON Corp. A 200 mm × 150 mm × 12 mm sheet of SUS 304 was inserted into the resin member from the opening side, and bending load was applied by the inserted metal plate in a section 0.2 mm away from the hatched section 4 in Fig. 1, which is the interface of the resin and metal of the composite, to bring about rupture of the composite. The bending moment at the time of rupture was divided by the section modulus of the entire bonding face, to derive the bending strength. Specifically, the value was derived by the following equation.

$$\text{Bending strength (Pa)} = 0.2\ (\text{m}) \times \text{load at rupture (N)}/(0.15\ (\text{m}) \times 0.012\ (\text{m}) \times 0.012\ (\text{m})/6)$$

Bonding was evaluated in terms of the state of the bonding face, in the following five levels A to E.

A: Peeling required a tool; resin part ruptured without peeling at metal-resin interface
B: Peeling required a tool; resin of thickness of 0.2 mm or more remained on metal side
C: Peelable by hand after extraction, but with some resistance and discoloration on the peeled surface of the metal
D: Peelable by hand after extraction, no change observed visually at the interface
E: Peeling occurred during ejection or during extraction, even without being touched by the hand

(Measurement of linear coefficient of expansion)

A test piece 4 mm wide, 4 mm thick, and 10 mm long was cut from the spool section (5 in Fig. 1) obtained during molding of the composite. Employing an SSC5000 TMA device made by Seiko Instruments Inc., a 2 g load was applied to the cut test piece, and the linear coefficient of expansion was measured in a temperature range of 50 to 150°C, at a rate of temperature increase of 5°C/min, taking the average value thereof as the linear coefficient of expansion of the thermoplastic resin.

(Measurement of crystallization temperature Tc)

As with measurement of linear coefficient of expansion, a test piece of thin plate form, not exceeding disk dimensions of 6 mm diameter and 1 mm thickness, was taken from the spool section. Measurements were made in a nitrogen atmosphere, employing as the device an EXSTAR 6000 DSC G6220 differential scanning calorimeter made by Seiko Instruments Inc. The test piece was heated from room temperature to 250°C at a rate of 10°C/min, held at 250°C for 10 minutes, then heated to a temperature of 25°C at a rate of 10°C/min. The peak temperature observed in the DSC during temperature decrease was designated as Tc.

Example 1

An aluminum test piece surface-treated using Treatment 1 was preheated in an SONW-450 natural convection dryer made by As One Corp., set to 200°C. The test piece was then positioned in a die for forming the composite of Fig. 1, which was attached to an SE-100D injection molder made by Sumitomo Heavy Industries Co. Ltd. A polyamide resin composition of a mixture of 12.5 mass% of (a-1) and 87.5 mass% of (a-6) was introduced into the injection molder, and injected into the die (at a die temperature of 150°C) at a resin temperature of 260°C, and after 40 seconds at a holding pressure of 40 MPa, was cooled in the die for 45 seconds, to obtain a composite of the shape in Fig. 1. Strength measurement and a bonding evaluation were performed on the obtained composite. Measurement of linear coefficient of expansion was performed on a cut test piece. Results are shown in Table 1.

Example 2

A composite was obtained as in Example 1, except for using 25 mass% of (a-1) and 75 mass% of (a-6) in Example 1. Strength measurement and a bonding evaluation were performed on the obtained composite. Measurement of linear coefficient of expansion was performed on a cut test piece. Results are shown in Table 1.

Example 3

A composite was obtained as in Example 1, except for using 50 mass% of (a-1) and 50 mass% of (a-6) in Example 1. Strength measurement and a bonding evaluation were performed on the obtained composite. Measurements of linear coefficient of expansion and crystallization temperature were performed on a cut test piece. Results are shown in Table 1.

Example 4

A composite was obtained as in Example 1, except for using 100 mass% of (a-1), and not using (a-6) in Example 1. Strength measurement and a bonding evaluation were performed on the obtained composite. Measurements of linear coefficient of expansion and crystallization temperature were performed on a cut test piece. Results are shown in Table 1.

Comparative Example 1

A composite was obtained as in Example 1, except for using 100 mass% of (a-6), and not using (a-1) in Example 1. Strength measurement and a bonding evaluation were performed on the obtained composite. Measurements of linear coefficient of expansion and crystallization temperature were performed on a cut test piece. Results are shown in Table 1.

[Table 1]

| | Thermoplastic resin | | | | | | Metal | | Molding conditions | | Composite | |
|---|---|---|---|---|---|---|---|---|---|---|---|---|
| | Resin | Amt. Mass% | Filler | Amt. Mass% | Linear expansion coeff 10^-5/°C | Crystallization temp °C | Type | Surface treatment | Die temp °C | Residual heat °C | Bonding | Bending strength MPa |
| Comparative Example 1 | Polyamide 6 | 60 | Talc/ wollastonite | 0/40 | 7.5 | 186.6 | Al | Treatment 1 | 150 | 200 | E | 1.2 |
| Example 1 | Polyamide 6 | 60 | | 5/35 | 7.5 | - | | | | | C-D | 4.7 |
| Example 2 | Polyamide 6 | 60 | | 10/30 | 7.5 | - | | | | | C-B | >15 |
| Example 3 | Polyamide 6 | 60 | | 20/20 | 7.5 | 192.1 | | | | | C-A | 9.5 |
| Example 4 | Polyamide 6 | 60 | | 40/0 | 7.5 | 193.3 | | | | | C-A | 7.6 |

Example 5

A steel test piece surface-treated using Treatment 1 was preheated in an SONW-450 natural convection dryer made by As One Corp., set to 200°C. The test piece was then positioned in a die for forming the composite of Fig. 1, which was attached to an SE-100D injection molder made by Sumitomo Heavy Industries Co. Ltd. A polyamide resin composition of a mixture of 2 mass% of (a-2), 66.7 mass% of (a-7), and 31.3 mass% of (a-11) was introduced into the injection molder, and injected into the die (at a die temperature of 150°C) at a resin temperature of 270°C, and after 45 seconds at a holding pressure of 50 MPa, was cooled in the die for 45 seconds, to obtain a composite of the shape in Fig. 1. Strength measurement and a bonding evaluation were performed on the obtained composite. Measurements of linear coefficient of expansion and crystallization temperature were performed on a cut test piece. Results are shown in Table 2.

Example 6

A composite was obtained as in Example 5, except for using 20 mass% of (a-2), 66.7 mass% of (a-7), and 13.3 mass% of (a-11) in Example 5. Strength measurement and a bonding evaluation were performed on the obtained composite. Measurements of linear coefficient of expansion and crystallization temperature were performed on a cut test piece. Results are shown in Table 2.

Example 7

A composite was obtained as in Example 5, except for using 2.5 mass% of (a-1), 66.7 mass% of (a-7), and 30.8 mass% of (a-11) in Example 5. Strength measurement and a bonding evaluation were performed on the obtained composite. Measurements of linear coefficient of expansion and crystallization temperature were performed on a cut test piece. Results are shown in Table 2.

Example 8

A composite was obtained as in Example 5, except for using 25 mass% of (a-1), 66.7 mass% of (a-7), and 8.3 mass% of (a-11) in Example 5. Strength measurement and a bonding evaluation were performed on the obtained composite. Measurements of linear coefficient of expansion and crystallization temperature were performed on a cut test piece. Results are shown in Table 2.

Example 9

A composite was obtained as in Example 5, except for using 50 mass% of (a-1), 44.4 mass% of (a-8), and 5.6 mass% of (a-11) in Example 5. Strength measurement and a bonding evaluation were performed on the obtained composite. Measurements of linear coefficient of expansion and crystallization temperature were performed on a cut test piece. Results are shown in Table 2.

Comparative Example 2

A composite was obtained as in Example 5, except for using 66.7 mass% of (a-7) and 33.3 mass% of (a-11) in Example 5. Strength measurement and a bonding evaluation were performed on the obtained composite. Measurements of linear coefficient of expansion and crystallization temperature were performed on a cut test piece. Results are shown in Table 2.

[Table 2]

| | Thermoplastic resin | | | | | | Metal | | Molding conditions | | Composite | |
|---|---|---|---|---|---|---|---|---|---|---|---|---|
| | Resin | Amt. Mass% | Filler | Amt. Mass% | Linear expansion coeff 10^-5/°C | Crystallization temp °C | Type | Surface treatment | Die temp °C | Residual heat °C | Bonding | Bending strength MPa |
| Comparative example 2 | Polyamide 6 | 80 | Glass fiber/ talc | 20/0 | 3.5 | 181.1 | Steel | Treatment 1 | 150 | 200 | E | 0.9 |
| Example 5 | Polyamide 6 | 79.99 | | 20/0.01 | 3.5 | 184.8 | | | | | D-C | 4.7 |
| Example 6 | Polyamide 6 | 79.9 | | 20/0.1 | 3.5 | 186.6 | | | | | D-C | 5.6 |
| Example 7 | Polyamide 6 | 79 | | 20/1 | 3.4 | 188.6 | | | | | C-B | 19.7 |
| Example 8 | Polyamide 6 | 70 | | 20/10 | 3.2 | 190.4 | | | | | C-A | >19.7 |
| Example 9 | Polyamide 6 | 60 | | 20/20 | 3.0 | 191.4 | | | | | C-A | 16.3 |

Example 10

A stainless steel test piece surface-treated using Treatment 1 was preheated in an SONW-450 natural convection dryer made by As One Corp., set to 200°C. The test piece was then positioned in a die for forming the composite of Fig. 1, which was attached to an SE-100D injection molder made by Sumitomo Heavy Industries Co. Ltd. (a-1) was introduced into the injection molder, and injected into the die (at a die temperature of 140°C) at a resin temperature of 270°C, and after 15 seconds at a holding pressure of 60 MPa, was cooled in the die for 30 seconds, to obtain a composite of the shape in Fig. 1. Strength measurement and a bonding evaluation were performed on the obtained composite. Measurements of linear coefficient of expansion and crystallization temperature were performed on a cut test piece. Results are shown in Table 3.

Example 11

A composite was obtained as in Example 10, except that the test piece was a steel material surface-treated using Treatment 1, rather than the stainless steel test piece surface-treated using Treatment 1 in Example 10. Strength measurement and a bonding evaluation were performed on the obtained composite. Measurements of linear coefficient of expansion and crystallization temperature were performed on a cut test piece. Results are shown in Table 3.

Example 12

A composite was obtained as in Example 10, except that the test piece was aluminum surface-treated using Treatment 1, rather than the stainless steel test piece surface-treated using Treatment 1 in Example 10. Strength measurement and a bonding evaluation were performed on the obtained composite. Measurements of linear coefficient of expansion and crystallization temperature were performed on a cut test piece. Results are shown in Table 3.

Example 13

A composite was obtained as in Example 10, except that the test piece was stainless steel surface-treated using Treatment 2, rather than the stainless steel test piece surface-treated using Treatment 1 in Example 10. Strength measurement and a bonding evaluation were performed on the obtained composite. Measurements of linear coefficient of expansion and crystallization temperature were performed on a cut test piece. Results are shown in Table 3.

Example 14

A composite was obtained as in Example 10, except that the test piece was a steel material surface-treated using Treatment 2, rather than the stainless steel test piece surface-treated using Treatment 2 in Example 13. Strength measurement and a bonding evaluation were performed on the obtained composite. Measurements of linear coefficient of expansion and crystallization temperature were performed on a cut test piece. Results are shown in Table 3.

Example 15

A composite was obtained as in Example 10, except that the test piece was aluminum surface-treated using Treatment 2, rather than the stainless steel test piece surface-treated using Treatment 2 in Example 13. Strength measurement and a bonding evaluation were performed on the obtained composite. Measurements of linear coefficient of expansion and crystallization temperature were performed on a cut test piece. Results are shown in Table 3.

Example 16

A stainless steel test piece surface-treated using Treatment 1 was preheated in an SONW-450 natural convection dryer made by As One Corp., set to 200°C. The test piece was then positioned in a die for forming the composite of Fig. 1, which was attached to an SE-100D injection molder made by Sumitomo Heavy Industries Co. Ltd. (a-3) was introduced into the injection molder, and injected into the die (at a die temperature of 140°C) at a resin temperature of 270°C, and after 15 seconds at a holding pressure of 60 MPa, was cooled in the die for 30 seconds, to obtain a composite of the shape in Fig. 1. Strength measurement and a bonding evaluation were performed on the obtained composite. Measurements of linear coefficient of expansion and crystallization temperature were performed on a cut test piece. Results are shown in Table 3.

Example 17

A composite was obtained as in Example 16, except that the test piece was a steel material surface-treated using Treatment 1, rather than the stainless steel test piece surface-treated using Treatment 1 in Example 16. Strength measurement and a bonding evaluation were performed on the obtained composite. Measurements of linear coefficient of expansion and crystallization temperature were performed on a cut test piece. Results are shown in Table 3.

Example 18

A composite was obtained as in Example 16, except that the test piece was aluminum surface-treated using Treatment 1, rather than the stainless steel test piece surface-treated using Treatment 1 in Example 16. Strength measurement and a bonding evaluation were performed on the obtained composite. Measurements of linear coefficient of expansion and crystallization temperature were performed on a cut test piece. Results are shown in Table 3.

Example 19

A composite was obtained as in Example 16, except that the test piece was stainless steel surface-treated using Treatment 2, rather than the stainless steel test piece surface-treated using Treatment 1 in Example 16. Strength measurement and a bonding evaluation were performed on the obtained composite. Measurements of linear coefficient of expansion and crystallization temperature were performed on a cut test piece. Results are shown in Table 3.

Example 20

A composite was obtained as in Example 19, except that the test piece was a steel material surface-treated using Treatment 2, rather than the stainless steel test piece surface-treated using Treatment 2 in Example 19. Strength measurement and a bonding evaluation were performed on the obtained composite. Measurements of linear coefficient of expansion and crystallization temperature were performed on a cut test piece. Results are shown in Table 3.

Example 21

A composite was obtained as in Example 19, except that the test piece was aluminum surface-treated using Treatment 2, rather than the stainless steel test piece surface-treated using Treatment 2 in Example 19. Strength measurement and a bonding evaluation were performed on the obtained composite. Measurements of linear coefficient of expansion and crystallization temperature were performed on a cut test piece. Results are shown in Table 3.

Example 22

A composite was obtained as in Example 10, except that the resin composition in Example 10 was replaced with a mixture of 50 mass% of (a-1) and 50 mass% of (a-9), and the die temperature was changed to 120°C. Strength measurement and a bonding evaluation were performed on the obtained composite. Measurement of linear coefficient of expansion was performed on a cut test piece. Results are shown in Table 3.

Example 23

A composite was obtained as in Example 22, except that the resin composition in Example 22 was replaced with (a-4), and the type of metal was changed to aluminum, and a bonding evaluation was performed. Measurements of linear coefficient of expansion and crystallization temperature were performed on a cut test piece. Results are shown in Table 3.

Example 24

A composite was obtained as in Example 23, except that the graphite of the resin composition in Example 23 was replaced with magnesium oxide, and the resin composition in Example 22 was replaced with (a-5), and a bonding evaluation was performed. Measurements of linear coefficient of expansion and crystallization temperature were performed on a cut test piece. Results are shown in Table 3.

Comparative Example 3

A stainless steel test piece surface-treated using Treatment 1 was preheated in an SONW-450 natural convection dryer made by As One Corp., set to 180°C. The test piece was then positioned in a die for forming the composite of Fig. 1, which was attached to an SE-100D injection molder made by Sumitomo Heavy Industries Co. Ltd. (a-7) was introduced into the injection molder, and injected into the die (at a die temperature of 80°C) at a resin temperature of 290°C, and after 15 seconds at a holding pressure of 60 MPa, was cooled in the die for 30 seconds, to obtain a composite of the shape in Fig. 1. Strength measurement and a bonding evaluation were performed on the obtained composite. Measurements of linear coefficient of expansion and crystallization temperature were performed on a cut test piece. Results are shown in Table 3.

Comparative Example 4

A composite was obtained as in Comparative Example 3, except that the test piece was a steel material surface-treated using Treatment 1, rather than the stainless steel test piece surface-treated using Treatment 1 in Comparative Example 3. Strength measurement and a bonding evaluation were performed on the obtained composite. Measurements of linear coefficient of expansion and crystallization temperature were performed on a cut test piece. Results are shown in Table 3.

Comparative Example 5

A composite was obtained as in Comparative Example 3, except that the test piece was aluminum surface-treated using Treatment 1, rather than the stainless steel test piece surface-treated using Treatment 1 in Comparative Example 3. Strength measurement and a bonding evaluation were performed on the obtained composite. Measurements of linear coefficient of expansion and crystallization temperature were performed on a cut test piece. Results are shown in Table 3.

Comparative Example 6

A composite was obtained as in Comparative Example 3, except that the test piece was stainless steel surface-treated using Treatment 2, rather than the stainless steel test piece surface-treated using Treatment 1 in Comparative Example 3. Strength measurement and a bonding evaluation were performed on the obtained composite. Measurements of linear coefficient of expansion and crystallization temperature were performed on a cut test piece. Results are shown in Table 3.

Comparative Example 7

A composite was obtained as in Comparative Example 6, except that the test piece was a steel material surface-treated using Treatment 2, rather than the stainless steel test piece surface-treated using Treatment 2 in Comparative Example 6. Strength measurement and a bonding evaluation were performed on the obtained composite. Measurements of linear coefficient of expansion and crystallization temperature were performed on a cut test piece. Results are shown in Table 3.

Comparative Example 8

A composite was obtained as in Comparative Example 6, except that the test piece was aluminum surface-treated using Treatment 2, rather than the stainless steel test piece surface-treated using Treatment 2 in Comparative Example 6. Strength measurement and a bonding evaluation were performed on the obtained composite. Measurements of linear coefficient of expansion and crystallization temperature were performed on a cut test piece. Results are shown in Table 3.

Comparative Example 9

A composite was obtained as in Comparative Example 3, except that the test piece was preheated at 200°C, and the die temperature was changed to 150°C, in Comparative Example 3. Strength measurement and a bonding evaluation were performed on the obtained composite. Measurements of linear coefficient of expansion and crystallization temperature were performed on a cut test piece. Results are shown in Table 3.

Comparative Example 10

A composite was obtained as in Comparative Example 9, except that the test piece was stainless steel surface-treated using Treatment 2, rather than the stainless steel test piece surface-treated using Treatment 1 in Comparative Example 9. Strength measurement and a bonding evaluation were performed on the obtained composite. Measurements of linear coefficient of expansion and crystallization temperature were performed on a cut test piece. Results are shown in Table 3.

Comparative Example 11

A composite was obtained as in Comparative Example 9, except for substituting (a-9) for (a-7) in Comparative Example 9. Strength measurement and a bonding evaluation were performed on the obtained composite. Measurements of linear coefficient of expansion and crystallization temperature were performed on a cut test piece. Results are shown in Table 3.

Comparative Example 12

A composite was obtained as in Comparative Example 11 except that the test piece was a steel material surface-treated using Treatment 1, rather than the stainless steel test piece surface-treated using Treatment 1 in Comparative Example 11. Strength measurement and a bonding evaluation were performed on the obtained composite. Measurements of linear coefficient of expansion and crystallization temperature were performed on a cut test piece. Results are shown in Table 3.

Comparative Example 13

A composite was obtained as in Comparative Example 11 except that the test piece was aluminum surface-treated using Treatment 1, rather than the stainless steel test piece surface-treated using Treatment 1 in Comparative Example 11. Strength measurement and a bonding evaluation were performed on the obtained composite. Measurements of linear coefficient of expansion and crystallization temperature were performed on a cut test piece. Results are shown in Table 3.

Comparative Example 14

A composite was obtained as in Comparative Example 9, except for substituting (a-6) for (a-9) in Comparative Example 9. Strength measurement and a bonding evaluation were performed on the obtained composite. Measurements of linear coefficient of expansion and crystallization temperature were performed on a cut test piece. Results are shown in Table 3.

Comparative Example 15

A composite was obtained as in Comparative Example 11, except that the test piece was stainless steel surface-treated using Treatment 2, rather than the stainless steel test piece surface-treated using Treatment 1 in Comparative Example 14. Strength measurement and a bonding evaluation were performed on the obtained composite. Measurements of linear coefficient of expansion and crystallization temperature were performed on a cut test piece. Results are shown in Table 3.

Comparative Example 16

A stainless steel test piece surface-treated using Treatment 1 was preheated in an SONW-450 natural convection dryer made by As One Corp., set to 200°C. The test piece was then positioned in a die for forming the composite of Fig. 1, which was attached to an SE-100D injection molder made by Sumitomo Heavy Industries Co. Ltd. (a-10) was introduced into the injection molder, and injected into the die (at a die temperature of 80°C) at a resin temperature of 290°C, and after 15 seconds at a holding pressure of 60 MPa, was cooled in the die for 30 seconds, to obtain a composite of the shape in Fig. 1. Strength measurement and a bonding evaluation were performed on the obtained composite. Results are shown in Table 3.

Comparative Example 17

A composite was obtained as in Comparative Example 16, except that the test piece was stainless steel surface-treated using Treatment 2, rather than the stainless steel test piece surface-treated using Treatment 1 in Comparative Example 16. Strength measurement and a bonding evaluation were performed on the obtained composite. Results are shown in Table 3.

Comparative Example 18

A composite was obtained as in Comparative Example 16, except for substituting (a-8) for (a-10) in Comparative Example 16. Strength measurement and a bonding evaluation were performed on the obtained composite. Measurements of linear coefficient of expansion and crystallization temperature were performed on a cut test piece. Results are shown in Table 3.

Comparative Example 19

A composite was obtained as in Comparative Example 18 except that the test piece was a steel material surface-treated using Treatment 1, rather than the stainless steel test piece surface-treated using Treatment 1 in Comparative Example 18. Strength measurement and a bonding evaluation were performed on the obtained composite. Measurements of linear coefficient of expansion and crystallization temperature were performed on a cut test piece. Results are shown in Table 3.

Comparative Example 20

A composite was obtained as in Comparative Example 18 except that the test piece was aluminum surface-treated using Treatment 1, rather than the stainless steel test piece surface-treated using Treatment 1 in Comparative Example 18. Strength measurement and a bonding evaluation were performed on the obtained composite. Measurements of linear coefficient of expansion and crystallization temperature were performed on a cut test piece. Results are shown in Table 3.

[Table 3]

| | Thermoplastic resin | | | | | | Metal | | Molding conditions | | Composite |
|---|---|---|---|---|---|---|---|---|---|---|---|
| | Resin | Amt. Mass% | Filler | Amt. Mass% | Linear expansion coeff 10^-5/°C | Crystallization temp °C | Type | Surface treatment | Die temp °C | Residual heat °C | Bonding |
| Example 10 | Polyamide 6 | 60 | Talc | 40 | 7.5 | 193.3 | SUS | Treatment 1 | 140 | 200 | A |
| Example 11 | Polyamide 6 | 60 | Talc | 40 | 7.5 | 193.3 | Steel | Treatment 1 | 140 | 200 | B-C |
| Example 12 | Polyamide 6 | 60 | Talc | 40 | 7.5 | 193.3 | Al | Treatment 1 | 140 | 200 | C |
| Example 13 | Polyamide 6 | 60 | Talc | 40 | 7.5 | 193.3 | SUS | Treatment 2 | 140 | 200 | A |
| Example 14 | Polyamide 6 | 60 | Talc | 40 | 7.5 | 193.3 | Steel | Treatment 2 | 140 | 200 | B-C |
| Example 15 | Polyamide 6 | 60 | Talc | 40 | 7.5 | 193.3 | Al | Treatment 2 | 140 | 200 | C |
| Example 16 | Polyamide 6 | 70 | Talc | 30 | 8.3 | 192.1 | SUS | Treatment 1 | 140 | 200 | A-B |
| Example 17 | Polyamide 6 | 70 | Talc | 30 | 8.3 | 192.1 | Steel | Treatment 1 | 140 | 200 | B |
| Example 18 | Polyamide 6 | 70 | Talc | 30 | 8.3 | 192.1 | Al | Treatment 1 | 140 | 200 | B |
| Example 19 | Polyamide 6 | 70 | Talc | 30 | 8.3 | 192.1 | SUS | Treatment 2 | 140 | 200 | A-B |
| Example 20 | Polyamide 6 | 70 | Talc | 30 | 8.3 | 192.1 | Steel | Treatment 2 | 140 | 200 | B-C |
| Example 21 | Polyamide 6 | 70 | Talc | 30 | 8.3 | 192.1 | Al | Treatment 2 | 140 | 200 | C |
| Example 22 | Polyamide 6, polyamide 66 | 30<br>27.5 | Talc, glass fiber | 20 22.5 | 4.8 | - | SUS | Treatment 1 | 120 | 200 | B-C |
| Example 23 | Polyamide 6 | 60* | Graphite | 40* | 7.9 | 193.7 | Al | Treatment 1 | 120 | 200 | A-B |
| Example 24 | Polyamide 6 | 60* | Magnesium oxide | 40* | 7.7 | 188.5 | Al | Treatment 1 | 120 | 200 | A-B |
| Comparative Example 3 | Polyamide 6 | 70 | Glass fiber | 30 | 3.2 | 182.3 | SUS | Treatment 1 | 80 | 180 | D |
| Comparative Example 4 | Polyamide 6 | 70 | Glass fiber | 30 | 3.2 | 182.3 | Steel | Treatment 1 | 80 | 180 | D |

(continued)

| | Thermoplastic resin | | | | | | Metal | | Molding conditions | | Composite |
|---|---|---|---|---|---|---|---|---|---|---|---|
| | Resin | Amt. Mass% | Filler | Amt. Mass% | Linear expansion coeff 10^-5/°C | Crystallization temp °C | Type | Surface treatment | Die temp °C | Residual heat °C | Bonding |
| Comparative Example 5 | Polyamide 6 | 70 | Glass fiber | 30 | 3.2 | 182.3 | Al | Treatment 1 | 80 | 180 | E |
| Comparative Example 6 | Polyamide 6 | 70 | Glass fiber | 30 | 3.2 | 182.3 | SUS | Treatment 2 | 80 | 180 | E |
| Comparative Example 7 | Polyamide 6 | 70 | Glass fiber | 30 | 3.2 | 182.3 | Steel | Treatment 2 | 80 | 180 | E |
| Comparative Example 8 | Polyamide 6 | 70 | Glass fiber | 30 | 3.2 | 182.3 | Al | Treatment 2 | 80 | 180 | E |
| Comparative Example 9 | Polyamide 6 | 70 | Glass fiber | 30 | 3.2 | 182.3 | SUS | Treatment 1 | 150 | 200 | E |
| Comparative Example 10 | Polyamide 6 | 70 | Glass fiber | 30 | 3.2 | 182.3 | SUS | Treatment 2 | 150 | 200 | E |
| Comparative Example 11 | Polyamide 66 | 70 | Glass fiber | 30 | 2.8 | 226.3 | SUS | Treatment 1 | 150 | 200 | E |
| Comparative Example 12 | Polyamide 66 | 70 | Glass fiber | 30 | 2.8 | 226.3 | Steel | Treatment 1 | 150 | 200 | E |
| Comparative Example 13 | Polyamide 66 | 70 | Glass fiber | 30 | 2.8 | 226.3 | Al | Treatment 1 | 150 | 200 | E |
| Comparative Example 14 | Polyamide 6 | 60 | Wollastonite | 40 | 7.5 | 186.6 | SUS | Treatment 1 | 150 | 200 | D |
| Comparative Example 15 | Polyamide 6 | 60 | Wollastonite | 40 | 7.5 | 186.6 | SUS | Treatment 2 | 150 | 200 | E |
| Comparative Example 16 | Polyamide 66, aromatic polyamide | 49<br>10 | Kaolin | 41 | - | - | SUS | Treatment 1 | 140 | 200 | D-E |

(continued)

| | Thermoplastic resin | | | | | | Metal | | Molding conditions | | Composite |
|---|---|---|---|---|---|---|---|---|---|---|---|
| | Resin | Amt. Mass% | Filler | Amt. Mass% | Linear expansion coeff 10^-5/°C | Crystallization temp °C | Type | Surface treatment | Die temp °C | Residual heat °C | Bonding |
| Comparative Example 17 | Polyamide 66, aromatic polyamide | 49<br>10 | Kaolin | 41 | - | - | SUS | Treatment 2 | 140 | 200 | E |
| Comparative Example 18 | Polyamide 66 | 55 | Glass fiber | 45 | 2.0 | 228.9 | SUS | Treatment 1 | 140 | 200 | E |
| Comparative Example 19 | Polyamide 66 | 55 | Glass fiber | 45 | 2.0 | 228.9 | Steel | Treatment 1 | 140 | 200 | E |
| Comparative Example 20 | Polyamide 66 | 55 | Glass fiber | 45 | 2.0 | 228.9 | Al | Treatment 1 | 140 | 200 | E |

*: Percentage by volume

## Claims

1. A composite obtained by contact bonding of thermoplastic resin composition (A) and a metal (B), wherein in the composite,
the thermoplastic resin composition (A) is a composition containing a thermoplastic resin and an inorganic filler for raising the crystallization temperature of the thermoplastic resin by 3°C or more; and
the metal (B) is a surface-treated metal.

2. The composite according to claim 1, wherein the thermoplastic resin is a polyamide resin.

3. The composite according to claim 1 or 2, wherein the inorganic filler is at least one selected from the group consisting of talc, graphite, magnesium oxide, kaolin, and calcium carbonate.

4. The composite according to claim 1 or 2, wherein the inorganic filler is at least one selected from the group consisting of talc, graphite, and magnesium oxide.

5. The composite according to any of claims 1 to 4, wherein the blending amount of the inorganic filler in the thermoplastic resin composition (A) is from 0.01 mass% to 50 mass%.

6. The composite according to any of claims 1 to 5, wherein the surface treatment of the metal (B) is a treatment for forming microscopic asperities on, or anchoring a chemical substance to, the surface thereof.

7. The composite according to any of claims 1 to 6, obtained by contact bonding through injection molding of the thermoplastic resin composition (A) and the metal (B).

8. The composite according to any of claims 1 to 7, wherein one shrinkage-inhibiting structure selected from the group consisting of a rib, protrusion, hole, and step is provided to a surface of the thermoplastic resin composition (A) facing the bonding surface of the thermoplastic resin composition (A) and the metal (B).

9. The composite according to any of claims 1 to 8, having an overall shape of tube or rod shape, with the resin and metal having a multilayer structure.

Fig. 1

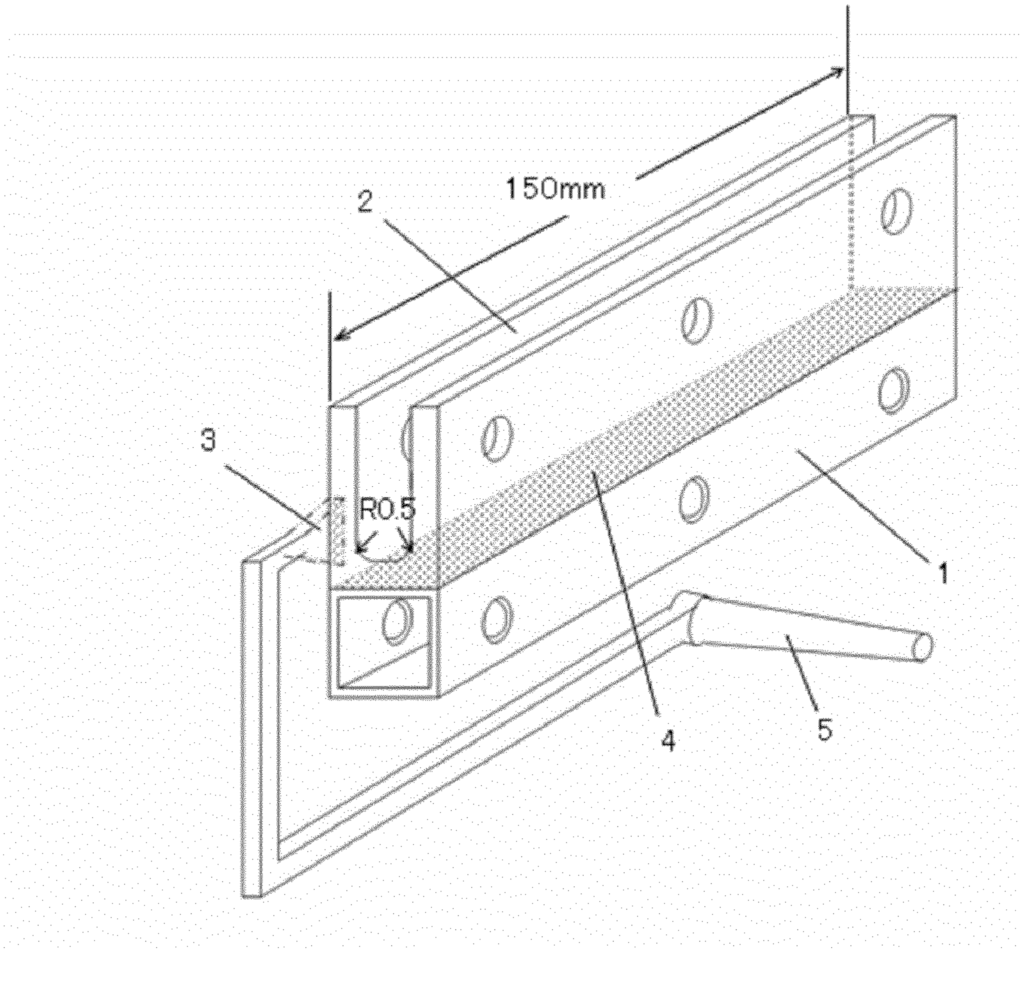

Fig. 2

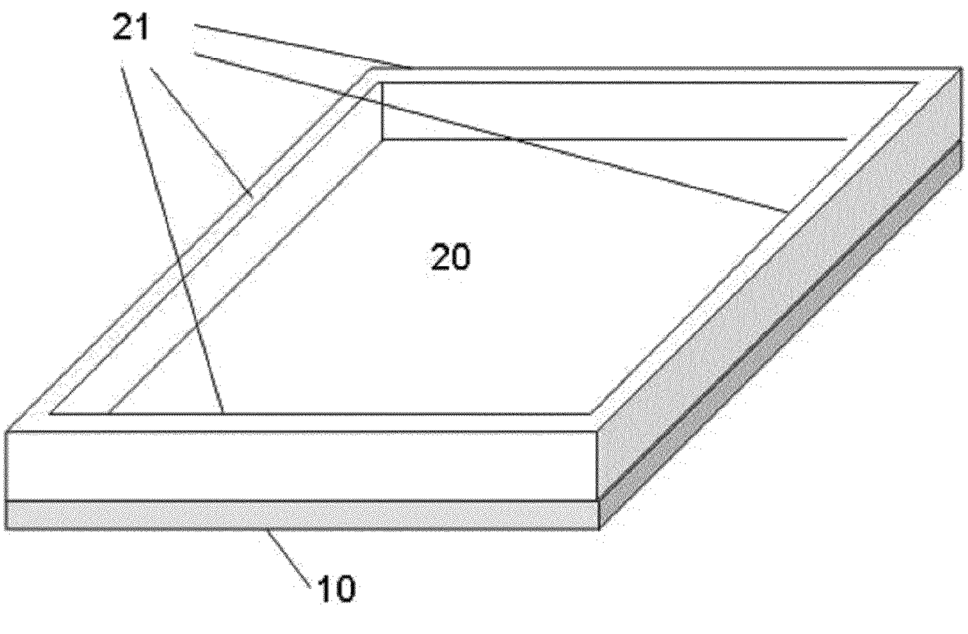

## INTERNATIONAL SEARCH REPORT

International application No.
PCT/JP2012/054091

A. CLASSIFICATION OF SUBJECT MATTER
*B29C45/14*(2006.01)i, *B32B27/20*(2006.01)i, *B32B27/34*(2006.01)i

According to International Patent Classification (IPC) or to both national classification and IPC

B. FIELDS SEARCHED

Minimum documentation searched (classification system followed by classification symbols)
B29C45/14, B32B27/20, B32B27/34

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2006-315398 A (Taisei Plas Co., Ltd.),<br>24 November 2006 (24.11.2006),<br>claims 1 to 7; paragraphs [0033], [0034], [0040]; example 2<br>(Family: none) | 1-9<br>6-9 |
| X<br>Y | JP 2007-182071 A (Toray Industries, Inc.),<br>19 July 2007 (19.07.2007),<br>claims 1, 2, 7, 9, 10; paragraphs [0071] to [0073]; example 1<br>& US 2009/0274889 A1 & EP 1958763 A1<br>& WO 2007/066742 A1 & KR 10-2008-0074929 A<br>& CN 101341023 A & KR 10-2010-0063152 A | 1-9<br>6-9 |

☒ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 March, 2012 (12.03.12) | 19 March, 2012 (19.03.12) |
| Name and mailing address of the ISA/<br>Japanese Patent Office<br>Facsimile No. | Authorized officer<br><br>Telephone No. |

Form PCT/ISA/210 (second sheet) (July 2009)

INTERNATIONAL SEARCH REPORT

International application No.
PCT/JP2012/054091

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | WO 2010/016485 A1 (Taisei Plas Co., Ltd.), 11 February 2010 (11.02.2010), claims 1, 13; paragraph [0101]; tables 1, 2 (Family: none) | 1-9<br>6-9 |
| Y | JP 05-051671 B2 (Kabushiki Kaisha Toa Denka), 03 August 1993 (03.08.1993), claims 1, 5; page 6, column 11, line 1 to column 12, line 7 & JP 2-298284 A | 6-9 |
| P,X | JP 2011-156764 A (Taisei Plas Co., Ltd.), 18 August 2011 (18.08.2011), claims 1, 12; paragraph [0036]; experimental example 9 (Family: none) | 1-9 |
| P,A | JP 2011-213108 A (Ube Industries, Ltd.), 27 October 2011 (27.10.2011), claims 1 to 4; paragraphs [0027], [0028] (Family: none) | 1-9 |
| A | JP 2003-176403 A (Asahi Kasei Corp.), 24 June 2003 (24.06.2003), claims 1 to 6; paragraphs [0016], [0019], [0020], [0049] (Family: none) | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3967104 B
- JP 4541153 B
- JP 5051671 A
- JP 4527196 B
- JP 2007182071 A